(19)

Europäisches
Patentamt
European
Patent Office
Office européen
des brevets

(11) **EP 4 629 502 A1**

(12) **EUROPEAN PATENT APPLICATION**
published in accordance with Art. 153(4) EPC

(43) Date of publication:
08.10.2025 Bulletin 2025/41

(21) Application number: 23896760.8

(22) Date of filing: 28.11.2023

(51) International Patent Classification (IPC):
*H02P 5/68* (2006.01)

(52) Cooperative Patent Classification (CPC):
H02K 11/20; H02P 5/68; H02P 7/29; Y02B 50/00

(86) International application number:
PCT/CN2023/134578

(87) International publication number:
WO 2024/114611 (06.06.2024 Gazette 2024/23)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.11.2022 CN 202211544118

(71) Applicant: Yanfeng International Automotive
Technology Co., Ltd.
Shanghai 201306 (CN)

(72) Inventors:
• LIU, Wenyuan
  Shanghai 201315 (CN)
• SONG, Weining
  Shanghai 201315 (CN)
• WANG, Hongmu
  Shanghai 201315 (CN)
• LU, Pan
  Shanghai 201315 (CN)

(74) Representative: Reitstötter Kinzebach
Patentanwälte
Sternwartstraße 4
81679 München (DE)

(54) **SYSTEM FOR CONTROLLING SYNCHRONOUS LIFTING/LOWERING OF MULTIPLE ELEMENTS AND METHOD FOR CONTROLLING SYNCHRONOUS LIFTING/LOWERING OF MULTIPLE ELEMENTS**

(57) Disclosed are a multi-element synchronous lifting control system and a method for controlling multi-elements to lift synchronously. The system at least includes: a first motor used for driving a first movable element, a first detecting module used for detecting output of the first motor, a second motor used for driving a second movable element, a second detecting module used for detecting output of the second motor, and a drive control module for controlling the first motor and the second motor. The drive control module is used for: receiving a synchronous instruction; controlling the first motor and the second motor to perform adaptive adjustment when the first motor and the second motor are in a start-up phase; determining whether a difference in each observation period between a detection value of the first detecting module and a detection value of the second detecting module is equal to 0 when the first motor and the second motor are in a stable phase; controlling compensation for the driving force of the first motor or the driving force of the second motor on condition of determining that the difference is not equal to 0; and determining that the first motor and the second motor reach target positions.

FIG. 2

**Description**

**FIELD OF THE DISCLOSURE**

The present disclosure relates to the field of vehicle control, and more particularly, to a multi-element synchronous lifting control system and a method for controlling multi-elements to lift synchronously.

**BACKGROUND**

With the rapid development of electric vehicles, more and higher requirements are placed on their interactivity. For instance, with the continuous development of intelligent driving technology, the requirements for in-vehicle screens have also become higher, such as a multi-screen linkage function, etc.
However, different motors inherently have relatively large deviations. Even motors of the same model may have deviations, and issues such as flatness of mechanical guide rails, levelness, resistance among bearings, and etc. At the meanwhile, different screens inherently have significant deviations as well. Thus, the lifting resistance varies among different screens, posing a great challenge to controlling the motors' outputs. Single driving force output for motors cannot achieve the same lifting speed for multiple screens in the same vehicle or for multiple screens in different vehicles, which poses a huge obstacle to multi-screen linkage.

**SUMMARY**

It is an object of the present disclosure to solve at least one aspect of the aforementioned problems and defects existing in the prior art.
Further to the aforementioned issues, a first aspect of the present disclosure proposes a multi-element synchronous lifting control system, which includes:

a first motor, configured to drive a first movable element coupled to the first motor;

a first detecting module, coupled to the first motor and configured to detect output of the first motor;

a second motor, configured to drive a second movable element coupled to the second motor;

a second detecting module, coupled to the second motor and configured to detect output of the second motor; and

a drive control module, coupled to the first motor and the second motor, wherein the drive control module is configured to:

receive a synchronous instruction, where the synchronous instruction includes an instruction to control the first movable element and the second movable element to rise or fall synchronously;

control the first motor and the second motor to perform adaptive adjustment when the first motor and the second motor are in a start-up phase;

determine whether a difference in each observation period between a detection value of the first detecting module and a detection value of the second detecting module is equal to 0 when the first motor and the second motor are in a stable phase;

determine that the first motor and the second motor have stable driving forces on condition of determining that the difference is equal to 0;

control compensation for the driving force of the first motor or the driving force of the second motor on condition of determining that the difference is not equal to 0; and

determine that the first motor and the second motor reach target positions.

In an embodiment, control the first motor and the second motor to perform adaptive adjustment when the first motor and the second motor are in the start-up phase further includes:

set a pulse width modulation (PWM) duty cycle of the first motor for start-up and a PWM duty cycle of the second motor for start-up separately to drive the first motor and the second motor to start;

detect a PWM duty cycle of a current driving force of the first motor and a PWM duty cycle of a current driving force of the second motor;

increase the PWM duty cycle of the driving force of the first motor at a first rate on condition that the PWM duty cycle of the current driving force of the first motor does not reach a PWM duty cycle of the stable driving force;

increase the PWM duty cycle of the driving force of the second motor at a second rate on condition that the PWM duty cycle of the current driving force of the second motor fails to reach the PWM duty cycle of the stable driving force; and

determine that the PWM duty cycle of the driving force of the first motor and the PWM duty cycle of the driving force of the second motor reach the PWM duty cycle of the stable driving force.

In an embodiment, the observation period ranges from 6ms to 10ms.

In an embodiment, control compensation for the driving force of the first motor or the driving force of the second motor on condition of determining that the difference is not equal to 0 further includes:

determine that a driving speed of the first motor is greater than a driving speed of the second motor on condition that the difference is greater than 0;

compensate for the PWM duty cycle of a current driving force of the second motor using a difference corresponding to a current observation period and a difference corresponding to a last observation period;

determine that the driving speed of the second motor is greater than the driving speed of the first motor on condition that the difference is less than 0; and

compensate for the PWM duty cycle of a current driving force of the first motor using the difference corresponding to the current observation period and the difference corresponding to the last observation period.

In an embodiment, compensate for the PWM duty cycle of the current driving force of the second motor using the difference corresponding to the current observation period and the difference corresponding to the last observation period further includes:

calculate an amount of compensation for the PWM duty cycle of the second motor using the following formula:

*amount of compensation for PWM duty cycle* $= k_p \cdot |Gap\_now| + k_d \cdot |Ga\_now - Gap\_last|$ ;

wherein $k_p$ is a proportion coefficient used to calculate the amount of compensation for the PWM duty cycle, $k_d$ is a differentiation coefficient used to calculate the amount of compensation for the PWM duty cycle, *Gap_now* is the difference corresponding to the current observation period, and *Gap_last* is the difference corresponding to the last observation period;

determine whether the amount of compensation for the PWM duty cycle of the second motor exceeds a first upper threshold;

compensate for the PWM duty cycle of the current driving force of the second motor using the first upper threshold on condition of determining that the amount of compensation for the PWM duty cycle of the second motor exceeds the first upper threshold; and

compensate for the PWM duty cycle of the current driving force of the second motor using the amount of compensation for the PWM duty cycle of the second motor on condition of determining that the amount of compensation for the PWM duty cycle of the second motor fails to exceed the first upper threshold.

In an embodiment, compensate for the PWM duty cycle of the current driving force of the first motor using the difference corresponding to the current observation period and the difference corresponding to the last observation period further includes:

calculate an amount of compensation for the PWM duty cycle of the first motor using the following formula:

*amount of compensation for PWM duty cycle = $k_p \cdot$ |Gap_now| + $k_d \cdot$ |Ga_now - Gap_last| ;*

wherein $k_p$ is a proportion coefficient used to calculate the amount of compensation for the PWM duty cycle, $k_d$ is a differentiation coefficient used to calculate the amount of compensation for the PWM duty cycle, *Gap_now* is the difference corresponding to the current observation period, and *Gap_last* is the difference corresponding to the last observation period;

determine whether the amount of compensation for the PWM duty cycle of the first motor exceeds a second upper threshold;

compensate for the PWM duty cycle of the current driving force of the first motor using the second upper threshold on condition of determining that the amount of compensation for the PWM duty cycle of the first motor exceeds the second upper threshold; and

compensate for the PWM duty cycle of the current driving force of the first motor using the amount of compensation for the PWM duty cycle of the first motor on condition of determining that the amount of compensation for the PWM duty cycle of the first motor fails to exceed the second upper threshold.

In an embodiment, the drive control module is further configured to:

on condition of receiving an instruction to instruct any one of the first motor or the second motor to rise or fall, control a counter associated with the corresponding motor to return to zero;

control the counter to record a number of observation periods required for the corresponding motor to reach the target position;

store the recorded number of the counter in a sampling filter array, on condition of determining that the corresponding motor reaches the target position;

determine whether the sampling filter array meets a sampling filter output condition; and

calculate the PWM duty cycle of the stable driving force according to a target running time on condition of determining that the sampling filter array meets the sampling filter output condition.

In an embodiment, determine whether the sampling filter array meets the sampling filter output condition further includes:
determine whether the recorded number stored in the sampling filter array meets the sampling filter output condition.
In an embodiment, calculate the stable driving force according to the target running time on condition of determining that the sampling filter array meets the sampling filter output condition, further includes:

calculate an average recorded number of the sampling filter array;

determine a time difference between the average recorded number and the target running time;

decrease the current PWM duty cycle of the stable driving force according to the time difference, on condition that the time difference is less than 0; and

increase the current PWM duty cycle of the stable driving force according to the time difference, on condition that the time difference is greater than 0.

Another aspect of the present disclosure further proposes a method for controlling multi-elements to lift synchronously using the multi-element synchronous lifting control system described in the first aspect above. The method includes:

receiving a synchronous instruction, wherein the synchronous instruction includes an instruction to control the first movable element and the second movable element to rise or fall synchronously;

controlling the first motor and the second motor to perform adaptive adjustment when the first motor and the second motor are in a start-up phase;

determining whether a difference in each observation period between a detection value of the first detecting module and a detection value of the second detecting module is equal to 0 when the first motor and the second motor are in a stable phase;

determining that the first motor and the second motor have stable driving forces on condition of determining that the difference is equal to 0;

controlling compensation for the driving force of the first motor or the driving force of the second motor on condition of determining that the difference is not equal to 0; and

determining that the first motor and the second motor reach target positions.

In an embodiment, controlling the first motor and the second motor to perform adaptive adjustment when the first motor and the second motor are in the start-up phase further includes:

setting a pulse width modulation (PWM) duty cycle of the first motor for start-up and a PWM duty cycle of the second motor for start-up separately to drive the first motor and the second motor to start;

detecting a PWM duty cycle of a current driving force of the first motor and a PWM duty cycle of a current driving force of the second motor;

increasing the PWM duty cycle of the driving force of the first motor at a first rate on condition that the PWM duty cycle of the current driving force of the first motor fails to reach a PWM duty cycle of a stable driving force;

increasing the PWM duty cycle of the driving force of the second motor at a second rate on condition that the PWM duty cycle of the current driving force of the second motor fails to reach the PWM duty cycle of the stable driving force; and

determining that the PWM duty cycle of the driving force of the first motor and the PWM duty cycle of the driving force of the second motor reach the PWM duty cycle of the stable driving force.

In an embodiment, controlling compensation for the driving force of the first motor or the driving force of the second motor, on condition of determining that the difference is not equal to 0, further includes:

determining that a driving speed of the first motor is greater than a driving speed of the second motor on condition that the difference is greater than 0;

compensating for the PWM duty cycle of the current driving force of the second motor using a difference corresponding to a current observation period and a difference corresponding to a last observation period;

determining that the driving speed of the second motor is greater than the driving speed of the first motor on condition that the difference is less than 0; and

compensating for the PWM duty cycle of a current driving force of the first motor using the difference corresponding to the current observation period and the difference corresponding to the last observation period.

In an embodiment, compensating for the PWM duty cycle of the current driving force of the second motor using the difference corresponding to the current observation period and the difference corresponding to the last observation period further includes:

calculating an amount of compensation for the PWM duty cycle of the second motor using the following formula:

*amount of compensation for PWM duty cycle = $k_p$ · |Gap_now| + $k_d$ · |Ga_now - Gap_last| ;*

wherein $k_p$ is a proportion coefficient used to calculate the amount of compensation for the PWM duty cycle, $k_d$ is a differentiation coefficient used to calculate the amount of compensation for the PWM duty cycle, *Gap_now* is the difference corresponding to the current observation period, and *Gap_last* is the difference corresponding to the last observation period;

determining whether the amount of compensation for the PWM duty cycle of the second motor exceeds a first upper threshold;

compensating for the PWM duty cycle of the current driving force of the second motor using the first upper threshold on condition of determining that the amount of compensation for the PWM duty cycle of the second motor exceeds the first upper threshold; and

compensating for the PWM duty cycle of the current driving force of the second motor using the amount of compensation for the PWM duty cycle of the second motor on condition of determining that the amount of compensation for the PWM duty cycle of the second motor fails to exceed the first upper threshold.

In an embodiment, compensating for the PWM duty cycle of the current driving force of the first motor using the difference corresponding to the current observation period and the difference corresponding to the last observation period further includes:

calculating an amount of compensation for the PWM duty cycle of the first motor using the following formula:

*amount of compensation for PWM duty cycle = $k_p$ · |Gap_now| + $k_d$ · |Ga_now - Gap_last| ;*

wherein $k_p$ is a proportion coefficient used to calculate the amount of compensation for the PWM duty cycle, $k_d$ is a differentiation coefficient used to calculate the amount of compensation for the PWM duty cycle, *Gap_now* is the difference corresponding to the current observation period, and *Gap_last* is the difference corresponding to the last observation period;

determining whether the amount of compensation for the PWM duty cycle of the first motor exceeds a second upper threshold;

compensating for the PWM duty cycle of the current driving force of the first motor using the second upper threshold on condition of determining that the amount of compensation for the PWM duty cycle of the first motor exceeds the second upper threshold; and

compensating for the PWM duty cycle of the current driving force of the first motor using the amount of compensation for the PWM duty cycle of the first motor on condition of determining that the amount of compensation for the PWM duty cycle of the first motor fails to exceed the second upper threshold.

In an embodiment, the method further includes:

on condition of receiving an instruction to instruct any one of the first motor or the second motor to rise or fall, controlling a counter associated with the corresponding motor to return to zero;

controlling the counter to record a number of observation periods required for the corresponding motor to reach the target position;

storing the recorded number of the counter in a sampling filter array, on condition of determining that the corresponding motor reaches the target position;

determining whether the sampling filter array meets a sampling filter output condition; and

calculating the stable driving force according to a target running time on condition of determining that the sampling filter array meets the sampling filter output condition.

In an embodiment, calculating the stable driving force according to the target running time on condition of determining that the sampling filter array meets the sampling filter output condition, further includes:

calculating an average recorded number of the sampling filter array;

determining a time difference between the average recorded number and the target running time;

decreasing the current PWM duty cycle of the stable driving force according to the time difference, on condition that the time difference is less than 0; and

increasing the current PWM duty cycle of the stable driving force according to the time difference, on condition that the time difference is greater than 0.

In the aforementioned exemplary embodiment of the present invention, compared to existing multi-element synchronous lifting technology, the multi-element synchronous lifting control system and the method disclosed herein can be used for position synchronization operation of direct current (DC) motors. It utilizes a control algorithm with variable PID parameters, calculates the position differences of multiple motors, and controls PWM duty cycles of the driving forces of multiple motors, such that synchronous lifting of multi-elements is achieved.

## BRIEF DESCRIPTION OF THE DRAWINGS

Embodiments of the present disclosure are shown and illustrated with reference to the accompanying drawings. These drawings are intended to illustrate the basic principles and thus show only those aspects necessary for understanding the basic principles. These drawings may not be drawn to scale. Same reference numerals in the drawings indicate similar features.

FIG. 1 shows a schematic diagram of the overall structure of a multi-element synchronous lifting control system according to the disclosure of the present invention;

FIG. 2 shows a schematic diagram of the overall flow of a first embodiment of a method for controlling multi-elements to lift synchronously using the multi-element synchronous lifting control system according to the disclosure of the present invention;

FIG. 3 shows a schematic diagram of the specific flow of step S20 in the method for controlling multi-elements to lift synchronously disclosed in FIG. 2;

FIG. 4 shows a schematic diagram of the specific flow of step S50 in the method for controlling multi-elements to lift synchronously disclosed in FIG. 2;

FIG. 5 shows a schematic diagram of the overall flow of a second embodiment of a method for controlling multi-elements to lift synchronously using the multi-element synchronous lifting control system according to the disclosure of the present invention; and

FIG. 6 shows a schematic diagram of the specific flow of step P50 in the method for controlling multi-elements to lift synchronously disclosed in FIG. 5.

## DETAILED DESCRIPTION

The technical solution of the present invention is further described in detail below through the embodiments and in conjunction with the accompanying drawings. The same or similar reference numerals throughout the description indicate the same or similar components. The following description of the embodiments of the present disclosure with reference to the accompanying drawings is intended to explain the overall inventive concept of the present invention and should not be construed as limitation to the present invention.

The terms "includes", "comprises" and the like used herein should be construed as open-ended terms, i.e., "includes/comprises but is not limited to", indicating that other elements may also be included. The term "based on" is "based at least partly on". The term "one embodiment" represents "at least one embodiment". The term "another embodiment" represents "at least one additional embodiment", etc.

The present invention mainly focuses on the following technical problem: how to achieve synchronous lifting control of multiple movable elements using direct current motors.

To solve the aforementioned problem, the present invention discloses a multi-element synchronous lifting control system, which includes: a first motor for driving a first movable element, a first detecting module for detecting output of the first motor, a second motor for driving a second movable element, a second detecting module for detecting output of the second motor, and a drive control module coupled to the motors above. The drive control module is used for: receiving a synchronous instruction; controlling the first motor and the second motor to perform adaptive adjustment when the first motor and the second motor are in a start-up phase; determining whether a difference in each observation period between a detection value of the first detecting module and a detection value of the second detecting module is equal to 0 when the first motor and the second motor are in a stable phase; controlling compensation for the driving force of the first motor or the driving force of the second motor on condition of determining that the difference is not equal to 0; and determining that the first motor and the second motor reach target positions.

Herein, the drive control module may directly drive the motor, or may control output of the motor through signals. The method of driving a motor directly may be setting the PWM duty cycle, through which the motor's output is directly affected. The way of controlling output through signals is applicable to motors that integrate electronic modules, such as servo motors or other motors with chips. The controller of servo motor sends signals containing instructions with motor's output parameters to the motor via SPI, CAN, or LIN, controlling the motor's output.

Herein, the movable elements may be structures with the movable function of lifting, such as display screens, audio devices, cameras, table boards, armrests, etc. The first movable element and the second movable element may be the same type of structures. For example, both of them are display screens. They may also be different types of structures. For example, the first movable element is a display screen and the second movable element is an audio device. The first detecting module and the second detecting module may detect the rotation speeds of the motors, such as Hall elements which may be disposed inside or outside the motors. They may also detect the lifting distances, such as displacement sensors, infrared sensors, and etc., which are disposed inside or outside the motors.

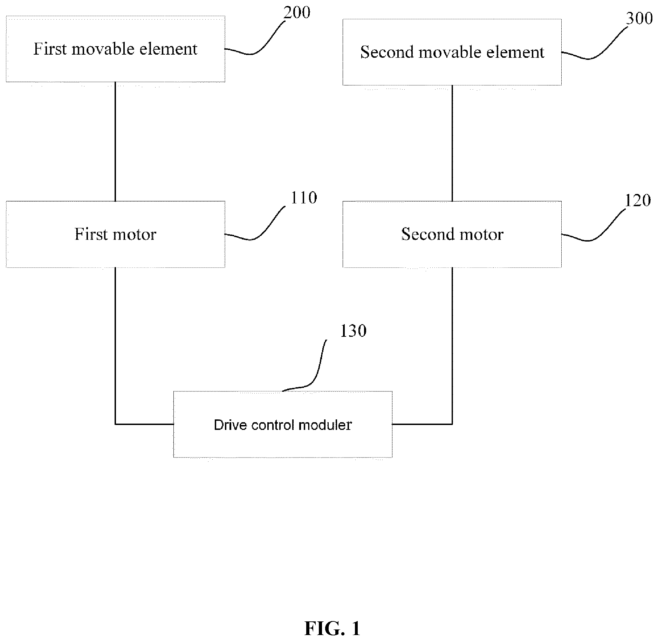

FIG. 1 shows a multi-element synchronous lifting control system that the present article discloses, which is used for controlling at least the first movable element 200 and the second movable element 300 to lift synchronously. The system includes a first motor 110, a second motor 120, a first detecting module (not shown in the figure), a second detecting module (not shown in the figure), and a drive control module 130. Specifically, the first motor 110 is used for driving the first movable element 200 coupled to the first motor. The second motor 120 is used for driving the second movable element 300 coupled to the second motor. The first detecting module is coupled to the first motor 110 and used for detecting output of the first motor 110. The second detecting module is coupled to the second motor 120 and used for detecting output of the second motor 120. The drive control module is coupled to the first motor 110 and the second motor 120.

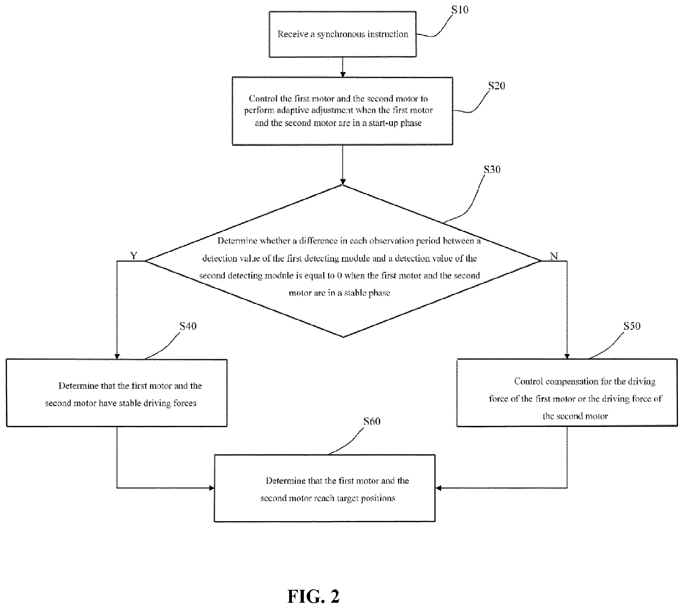

FIG. 2 shows a method for controlling multi-elements to lift synchronously, which is realized by using the multi-element synchronous lifting control system. This method is generally realized through mutual communication among the drive control module 130 and the first motor 110, the second motor 120, the first detecting module, and the second detecting module. The specific flow is as follows:

Step S10: the drive control module 130 receives a synchronous instruction from the user. Specifically, the synchronous instruction includes an instruction to control the first movable element 200 and the second movable element 300 to rise or fall synchronously.

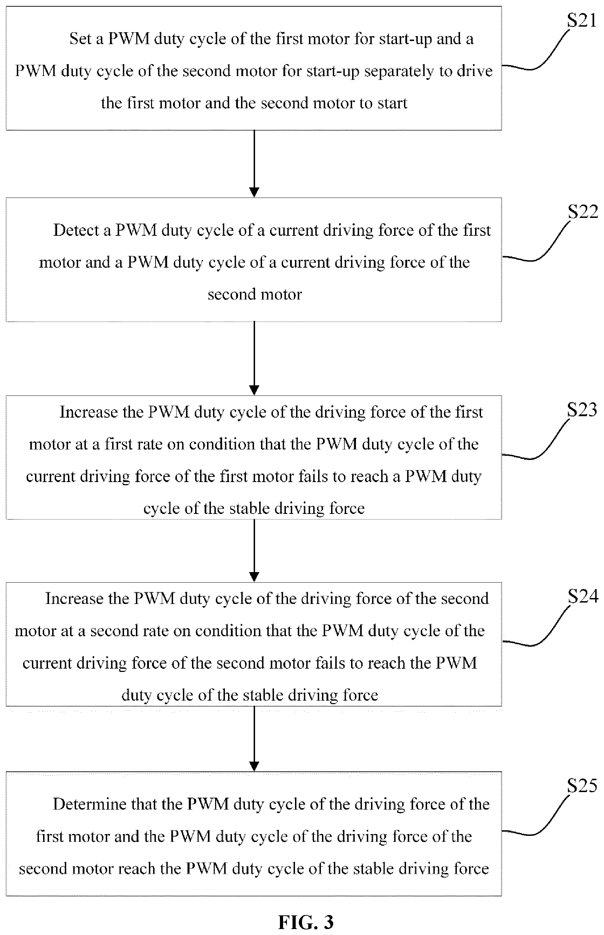

Step S20: the first motor 110 and the second motor 120 are controlled to perform adaptive adjustment when the first motor 110 and the second motor 120 are in a start-up phase. As shown in FIG. 3, the specific operations of this step are as follows.

Step S21: the drive control module 130 sets a pulse width modulation (PWM) duty cycle of the first motor 110 for start-up and a PWM duty cycle of the second motor 120 for start-up separately to drive the first motor 110 and the second motor 120 to start.

For example, the drive control module 130 may set the PWM duty cycles of the first motor 110 and the second motor 120 for start-up to be 20%.

Step S22: a PWM duty cycle of a current driving force of the first motor 110 and a PWM duty cycle of a current driving force of the second motor 120 are detected.

Step S23: the PWM duty cycle of the driving force of the first motor 110 is increased at a first rate on condition that the PWM duty cycle of the current driving force of the first motor 110 fails to reach a PWM duty cycle of the stable driving force.

Specifically, the PWM duty cycle of the driving force of the first motor 110 may be increased at a rate of 3.75% to 10% PWM duty cycle per 10ms, such that the PWM duty cycle of the driving force of the first motor 110 continues to increase until it reaches the PWM duty cycle of the stable driving force.

In this example, the PWM duty cycle of the driving force of the first motor 110 is preferably increased at a rate of 5% PWM duty cycle per 10ms, such that the PWM duty cycle of the driving force of the first motor 110 is steadily increased to the PWM duty cycle of the stable driving force.

Step S24: the PWM duty cycle of the driving force of the second motor 120 is increased at a second rate on condition that the PWM duty cycle of the current driving force of the second motor 120 fails to reach the PWM duty cycle of the stable driving force.

The specific operation of this step is similar to that of step S23, and will not be repeated here.

Step S25: it is determined that the PWM duty cycle of the driving force of the first motor 110 and the PWM duty cycle of the driving force of the second motor 120 reach the PWM duty cycle of the stable driving force.

In this example, when the PWM duty cycle of the driving force of the first motor 110 and the PWM duty cycle of the driving force of the second motor 120 reach 60%, the drive control module 130 can determine that they have reached the PWM duty cycle of the stable driving force.

In practical operations, the PWM duty cycle for start-up and the PWM duty cycle of the stable driving force may be set according to the configurations of different motors, the configurations of movable elements, and actual requirements.

The disclosed step of adaptive adjustment can make up for the characteristics of in-vehicle usage, thereby ensuring that the motors can effectively transition from the start-up phase to the stable phase under the influence of external environmental factors such as different voltages, different temperatures, and etc.

Step S30: whether a difference in each observation period between a detection value from the first detecting module and a detection value from the second detecting module is equal to 0, is judged when the first motor 110 and the second motor 120 are in the stable phase.

In this example, the detection value of the first detecting module (e.g., a Hall element) is utilized to determine a rotational position of the first motor 110. The detection value of the second detecting module (e.g., a Hall element) is utilized to determine the rotational position of the second motor 120. Thus the difference Gap between them is obtained.

In this example, the observation period ranges from 6ms to 10ms, preferably 10ms in general.

Step S40: it is determined that both the first motor 110 and the second motor 120 have stable driving forces on condition that it is determined that the difference is equal to 0.

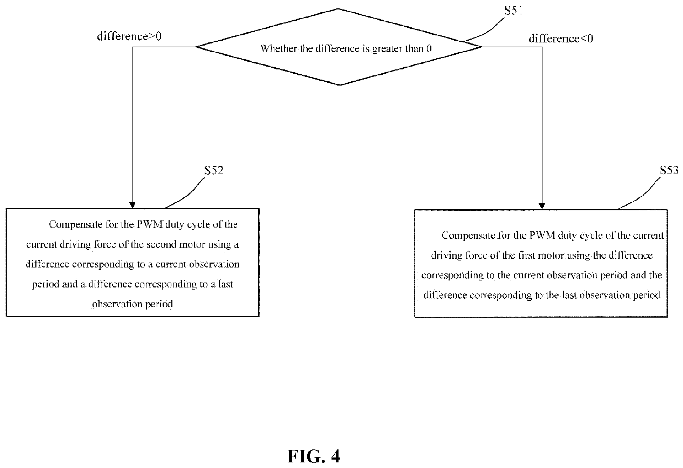

Step S50: compensation for the driving force of the first motor 110 or the driving force of the second motor 120 is controlled, on condition that it is determined that the difference is not equal to 0. As shown in FIG. 4, the specific operations of this step are as follows.

Step S51: whether the aforementioned difference Gap is greater than 0, is determined.

Step S52: it is determined that a driving speed of the first motor 110 is greater than a driving speed of the second motor 120, on condition that the difference is greater than 0.

In this example, on condition of determining that the driving speed of the second motor 120 is less than that of the first motor 110, the drive control module requires to compensate the second motor 120, such that the effect that "the slow chases the fast" (i.e., the slower motor chases after the faster motor) can be achieved.

For example, the PWM duty cycle of the current driving force of the second motor 120 is compensated for using the difference Gap_now corresponding to the current observation period T1 and the difference Gap_last corresponding to the last observation period T0.

An amount of compensation for the PWM duty cycle of the second motor is calculated using the following formula:

*amount of compensation for PWM duty cycle* = $k_p \cdot |Gap\_now| + k_d \cdot |Ga\_now - Gap\_last|$ ;

where $k_p$ is a proportion coefficient used to calculate the amount of compensation for the PWM duty cycle, $k_d$ is a differentiation coefficient used to calculate the amount of compensation for the PWM duty cycle, *Gap_now* is the difference corresponding to the current observation period, and *Gap_last* is the difference corresponding to the last observation period.

In this example, $k_p$ is the proportion coefficient of the amount of compensation for the PWM duty cycle. It is obtained by inputting data, which is collected from the actual control of the motor (e.g., a DC brushed motor), into a corresponding simulation model for data processing. $k_d$ is the differentiation coefficient of the amount of compensation for the PWM duty cycle. It is obtained by inputting data, which is collected from the actual control of the motor (e.g., a DC brushed motor), into a corresponding simulation model for data processing.

Then, it is determined whether the amount of compensation for the PWM duty cycle of the second motor 120 exceeds a first upper threshold.

The PWM duty cycle of the current driving force of the second motor 120 is compensated for using the first upper threshold, on condition that it is determined that the amount of compensation for the PWM duty cycle of the second motor 120 exceeds the first upper threshold.

The PWM duty cycle of the current driving force of the second motor 120 is compensated for using the calculated amount of compensation for the PWM duty cycle of the second motor 120, on condition of determining that the amount of compensation for the PWM duty cycle of the second motor 120 fails to exceed the first upper threshold.

Step S53: it is determined that the driving speed of the second motor is greater than the driving speed of the first motor, on condition that the difference is less than 0.

In this example, on condition of determining that the driving speed of the first motor 110 is less than that of the second motor 120, the drive control module needs to compensate the first motor 110 such that the effect that "the slow chases the fast" can be achieved.

For example, the PWM duty cycle of the current driving force of the first motor 110 is compensated for using the difference Gap_now corresponding to the current observation period T1 and the difference Gap_last corresponding to the last observation period T0.

An amount of compensation for the PWM duty cycle of the first motor 110 is calculated using the following formula:

$$amount\ of\ compensation\ for\ PWM\ duty\ cycle = k_p \cdot |Gap\_now| + k_d \cdot |Ga\_now - Gap\_last| ;$$

The above formula is similar to the formula for calculating the amount of compensation for the PWM duty cycle of the second motor 120, and will not be repeated herein.

Then, it is determined whether the amount of compensation for the PWM duty cycle of the first motor exceeds a second upper threshold. The PWM duty cycle of the current driving force of the first motor is compensated for using the second upper threshold, on condition of determining that the amount of compensation for the PWM duty cycle of the first motor exceeds the second upper threshold.

And the PWM duty cycle of the current driving force of the first motor 110 is compensated for using the calculated amount of compensation for the PWM duty cycle of the first motor 110, on condition of determining that the amount of compensation for the PWM duty cycle of the first motor 120 fails to exceed the second upper threshold.

Step S60: it is determined that the first motor and the second motor reach target positions.

The method for controlling multi-element synchronous lifting disclosed herein can utilize output dynamic PWM duty cycles, and utilize the PID algorithm to calculate the amount of compensation for the PWM duty cycle based on the principle that "the slow chases the fast", adjusting the PWM duty cycle of the slower motor, and achieving the purpose of synchronous lifting of multiple movable elements.

In addition, during the process of controlling the first motor and the second motor to synchronously drive the first movable element 200 and the second movable element 300 to rise or fall, the drive control module 130 can also calculate the total running time of each of the first motor 110 and the second motor 120, to ensure that the time for the motor to control the corresponding movable element to rise or fall through the full stroke can be controlled within the required error range.

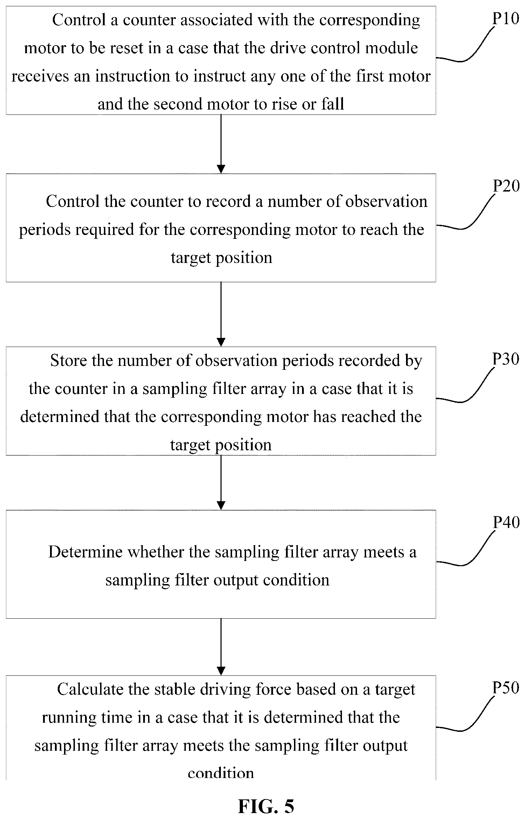

As shown in FIG. 5, the method for controlling the total running time during the process of the drive control module 130 controlling the first motor 110 and the second motor 120 to synchronously drive the first movable element 200 and the second movable element 300 to rise or fall is disclosed.

Step P10: a counter associated with the corresponding motor is controlled to return to zero, on condition that an instruction to instruct any one of the first motor 110 and the second motor 120 (e.g., the first motor 110) to rise or fall is received.

Step P20: the counter is controlled to record a number of observation periods required for the corresponding motor to reach the target position.

Specifically, the counter of the drive control module 130 associated with the first motor 110 records the number n of observation periods (for example, 10ms) required for the first motor 110 to reach the target position from the initial position. That is, the number n of observation periods (for example, 10ms) required for the first motor 110 to undergo the steps S20 to S60 shown in FIG. 2.

Step P30: the recorded number of the counter is stored in a sampling filter array, on condition of determining that the corresponding motor reaches the target position.

Then, the drive control module 130 stores the count value n obtained by the counter into the sampling filter array.

Step P40: it is determined whether the sampling filter array meets a sampling filter output condition.

In this step, it is determined whether a number of records stored in the sampling filter array meets the sampling filter output condition.

For example, the sampling filter output condition includes a rising output condition and a falling output condition. The rising output condition is that the maximum number of rising records stored in the sampling filter array is X. The falling output condition is that the maximum number of falling records stored in the sampling filter array is Y. Therefore, when the current stored count value n corresponds to the rising output condition and the number of rising records reaches X, step P50 is executed.

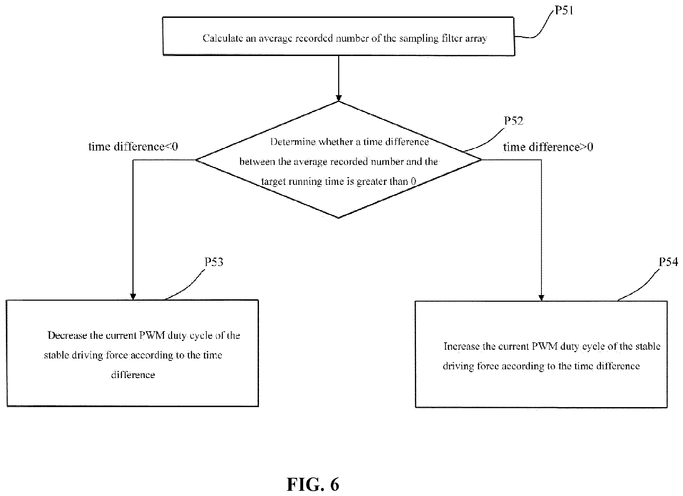

Step P50: the stable driving force is calculated according to a target running time, on condition of determining that the sampling filter array meets the sampling filter output condition. As shown in FIG. 6, the specific operations of this step are as follows.

Step P51: an average recorded number of the sampling filter array is calculated.

For example, the average recorded number for the rising phase can be calculated using the following formula:

$$\bar{x} = (n_1 + n_2 + n_i \dots + n_X)/X \ ;$$

wherein, $n_i$ is the i-th rising count value, and X is the rising output condition.

The average recorded number for the falling phase can be calculated using the following formula:

$$\bar{y} = \left(m_1 + m_2 + m_j \dots + m_Y\right)/Y;$$

wherein, $m_j$ is the j-th falling count value, and $Y$ is the falling output condition.

Step P52: a time difference between the average recorded number and the target running time is determined.

Specifically, the time difference between the average recorded number for the rising phase and the corresponding target running time for the rising phase, and the time difference between the average recorded number for the falling phase and the corresponding target running time for the falling phase are separately determined.

Step P53: the current PWM duty cycle of the stable driving force is decreased according to the time difference, on condition that the time difference is less than 0.

For example, on condition that the time difference for the rising phase is less than 0, the PWM duty cycle of the stable driving force of the first motor 110 in the rising phase is decreased according to the time difference for the rising phase.

On condition that the time difference for the falling phase is less than 0, the PWM duty cycle of the stable driving force of the first motor 110 in the falling phase is decreased according to the time difference for the falling phase.

Step P54: the current PWM duty cycle of the stable driving force is increased according to the time difference, on condition that the time difference is greater than 0.

For example, on condition that the time difference for the rising phase is greater than 0, the PWM duty cycle of the stable driving force of the first motor 110 in the rising phase is increased according to the time difference for the rising phase.

On condition that the time difference for the falling phase is greater than 0, the PWM duty cycle of the stable driving force of the first motor 110 in the falling phase is increased according to the time difference for the falling phase.

The disclosed control method for total running time, by utilizing a filtering strategy, can prevent external interference (for instance, direct physical contact by human's hands during the lifting process of an in-vehicle screen) from hindering moving mechanical components (such as motors), thereby reducing disturbances to time control parameters.

The multi-element synchronous lifting control system and the method for controlling multi-elements to lift synchronously disclosed herein can ensure full communication between system of the mechanical components and system of the electronic control from a system level, thereby improving the reliability of control. In addition, the technical solution disclosed herein is applicable to DC motors, so that lower-cost DC motors with the help of PID algorithm in practical applications can achieve a similar effect of higher-cost servo control systems.

In view of the above, although the present disclosure has been described with reference to specific examples, these examples are merely illustrative and not intended to limit the present disclosure. It is obvious to those skilled in the art that changes, additions, or deletions to the disclosed embodiments can be made without departing from the spirit and scope of protection of the present disclosure.

**Claims**

1. A multi-element synchronous lifting control system, comprising:

> a first motor configured to drive a first movable element coupled to the first motor;
> a first detecting module coupled to the first motor and configured to detect output of the first motor;
> a second motor configured to drive a second movable element coupled to the second motor;

a second detecting module coupled to the second motor and configured to detect output of the second motor; and a drive control module coupled to the first motor and the second motor, wherein the drive control module is configured to:

receive a synchronous instruction, wherein the synchronous instruction includes an instruction to control the first movable element and the second movable element to rise or fall synchronously;

control the first motor and the second motor to perform adaptive adjustment when the first motor and the second motor are in a start-up phase;

determine whether a difference in each observation period between a detection value of the first detecting module and a detection value of the second detecting module is equal to 0 when the first motor and the second motor are in a stable phase;

determine that the first motor and the second motor have stable driving forces on condition of determining that the difference is equal to 0;

control compensation for the driving force of the first motor or the driving force of the second motor on condition of determining that the difference is not equal to 0; and

determine that the first motor and the second motor reach target positions.

2. The multi-element synchronous lifting control system according to claim 1, wherein control the first motor and the second motor to perform adaptive adjustment when the first motor and the second motor are in the start-up phase further comprises:

set a pulse width modulation (PWM) duty cycle of the first motor for start-up and a PWM duty cycle of the second motor for start-up separately to drive the first motor and the second motor to start;

detect a PWM duty cycle of a current driving force of the first motor and a PWM duty cycle of a current driving force of the second motor;

increase the PWM duty cycle of the driving force of the first motor at a first rate on condition that the PWM duty cycle of the current driving force of the first motor fails to reach a PWM duty cycle of a stable driving force;

increase the PWM duty cycle of the driving force of the second motor at a second rate on condition that the PWM duty cycle of the current driving force of the second motor fails to reach the PWM duty cycle of the stable driving force; and

determine that the PWM duty cycle of the driving force of the first motor and the PWM duty cycle of the driving force of the second motor reach the PWM duty cycle of the stable driving force.

3. The multi-element synchronous lifting control system according to claim 1, wherein the observation period ranges from 6ms to 10ms.

4. The multi-element synchronous lifting control system according to claim 1, wherein control compensation for the driving force of the first motor or the driving force of the second motor on condition of determining that the difference is not equal to 0 further comprises:

determine that a driving speed of the first motor is greater than a driving speed of the second motor on condition that the difference is greater than 0;

compensate for the PWM duty cycle of a current driving force of the second motor using the difference corresponding to a current observation period and a difference corresponding to a last observation period;

determine that the driving speed of the second motor is greater than the driving speed of the first motor on condition that the difference is less than 0; and

compensate for the PWM duty cycle of a current driving force of the first motor using the difference corresponding to the current observation period and the difference corresponding to the last observation period.

5. The multi-element synchronous lifting control system according to claim 4, wherein compensate for the PWM duty cycle of the current driving force of the second motor using the difference corresponding to the current observation period and the difference corresponding to the last observation period further comprises:

calculate an amount of compensation for the PWM duty cycle of the second motor using the following formula:

*amount of compensation for PWM duty cycle = $k_p \cdot |Gap\_now| + k_d \cdot |Ga\_now - Gap\_last|$ ;*

wherein $k_p$ is a proportion coefficient used to calculate the amount of compensation for the PWM duty cycle, $k_d$ is a differentiation coefficient used to calculate the amount of compensation for the PWM duty cycle, *Gap_now* is the difference corresponding to the current observation period, and *Gap_last* is the difference corresponding to the last observation period;

determine whether the amount of compensation for the PWM duty cycle of the second motor exceeds a first upper threshold;

compensate for the PWM duty cycle of the current driving force of the second motor using the first upper threshold on condition of determining that the amount of compensation for the PWM duty cycle of the second motor exceeds the first upper threshold; and

compensate for the PWM duty cycle of the current driving force of the second motor using the amount of compensation for the PWM duty cycle of the second motor on condition of determining that the amount of compensation for the PWM duty cycle of the second motor fails to exceed the first upper threshold.

6. The multi-element synchronous lifting control system according to claim 4, wherein compensate for the PWM duty cycle of the current driving force of the first motor using the difference corresponding to the current observation period and the difference corresponding to the last observation period further comprises:

calculate an amount of compensation for the PWM duty cycle of the first motor using the following formula:

*amount of compensation for PWM duty cycle = $k_p$ · |Gap_now| + $k_d$ · |Ga_now - Gap_last| ;*

wherein $k_p$ is a proportion coefficient used to calculate the amount of compensation for the PWM duty cycle, $k_d$ is a differentiation coefficient used to calculate the amount of compensation for the PWM duty cycle, *Gap_now* is the difference corresponding to the current observation period, and *Gap_last* is the difference corresponding to the last observation period;

determine whether the amount of compensation for the PWM duty cycle of the first motor exceeds a second upper threshold;

compensate for the PWM duty cycle of the current driving force of the first motor using the second upper threshold on condition of determining that the amount of compensation for the PWM duty cycle of the first motor exceeds the second upper threshold; and

compensate for the PWM duty cycle of the current driving force of the first motor using the amount of compensation for the PWM duty cycle of the first motor on condition of determining that the amount of compensation for the PWM duty cycle of the first motor fails to exceed the second upper threshold.

7. The multi-element synchronous lifting control system according to claim 1, wherein the drive control module is further configured to:

on condition of receiving an instruction to instruct any one of the first motor or the second motor to rise or fall, control a counter associated with the corresponding motor to return to zero;

control the counter to record a number of observation periods required for the corresponding motor to reach the target position;

store the recorded number of the counter in a sampling filter array, on condition of determining that the corresponding motor reaches the target position;

determine whether the sampling filter array meets a sampling filter output condition; and

calculate the stable driving force according to a target running time on condition of determining that the sampling filter array meets the sampling filter output condition.

8. The multi-element synchronous lifting control system according to claim 7, wherein determine whether the sampling filter array meets the sampling filter output condition further comprises:
determine whether the recorded number stored in the sampling filter array meets the sampling filter output condition.

9. The multi-element synchronous lifting control system according to claim 7, wherein calculate the stable driving force according to the target running time, on condition of determining that the sampling filter array meets the sampling filter output condition, further comprises:

calculate an average recorded number of the sampling filter array;

determine a time difference between the average recorded number and the target running time;

decrease the current PWM duty cycle of the stable driving force according to the time difference, on condition that the time difference is less than 0; and
increase the current PWM duty cycle of the stable driving force according to the time difference, on condition that the time difference is greater than 0.

10. A method for controlling multi-elements to lift synchronously using the multi-element synchronous lifting control system according to any one of claims 1 to 9, the method comprising:

receiving a synchronous instruction, wherein the synchronous instruction includes an instruction to control the first movable element and the second movable element to rise or fall synchronously;
controlling the first motor and the second motor to perform adaptive adjustment when the first motor and the second motor are in a start-up phase;
determining whether a difference in each observation period between a detection value of the first detecting module and a detection value of the second detecting module is equal to 0 when the first motor and the second motor are in a stable phase;
determining that the first motor and the second motor have stable driving forces on condition of determining that the difference is equal to 0;
controlling compensation for the driving force of the first motor or the driving force of the second motor on condition of determining that the difference is not equal to 0; and
determining that the first motor and the second motor reach target positions.

11. The method for controlling multi-elements to lift synchronously according to claim 10, wherein controlling the first motor and the second motor to perform adaptive adjustment when the first motor and the second motor are in the start-up phase further comprises:

setting a pulse width modulation (PWM) duty cycle of the first motor for start-up and a PWM duty cycle of the second motor for start-up separately to drive the first motor and the second motor to start;
detecting a PWM duty cycle of a current driving force of the first motor and a PWM duty cycle of a current driving force of the second motor;
increasing the PWM duty cycle of the driving force of the first motor at a first rate on condition that the PWM duty cycle of the current driving force of the first motor fails to reach a PWM duty cycle of a stable driving force;
increasing the PWM duty cycle of the driving force of the second motor at a second rate on condition that the PWM duty cycle of the current driving force of the second motor fails to reach the PWM duty cycle of the stable driving force; and
determining that the PWM duty cycle of the driving force of the first motor and the PWM duty cycle of the driving force of the second motor reach the PWM duty cycle of the stable driving force.

12. The method for controlling multi-elements to lift synchronously according to claim 10, wherein controlling compensation for the driving force of the first motor or the driving force of the second motor, on condition of determining that the difference is not equal to 0, further comprises:

determining that a driving speed of the first motor is greater than a driving speed of the second motor on condition that the difference is greater than 0;
compensating for the PWM duty cycle of a current driving force of the second motor using a difference corresponding to a current observation period and a difference corresponding to a last observation period;
determining that the driving speed of the second motor is greater than the driving speed of the first motor on condition that the difference is less than 0; and
compensating for the PWM duty cycle of a current driving force of the first motor using the difference corresponding to the current observation period and the difference corresponding to the last observation period.

13. The method for controlling multi-elements to lift synchronously according to claim 12, wherein compensating for the PWM duty cycle of the current driving force of the second motor using the difference corresponding to the current observation period and the difference corresponding to the last observation period further comprises:

calculating an amount of compensation for the PWM duty cycle of the second motor using the following formula:

$$\text{amount of compensation for PWM duty cycle} = k_p \cdot |Gap\_now| + k_d \cdot |Ga\_now - Gap\_last| \ ;$$

wherein $k_p$ is a proportion coefficient used to calculate the amount of compensation for the PWM duty cycle, $k_d$ is a differentiation coefficient used to calculate the amount of compensation for the PWM duty cycle, *Gap_now* is the difference corresponding to the current observation period, and *Gap_last* is the difference corresponding to the last observation period;

determining whether the amount of compensation for the PWM duty cycle of the second motor exceeds a first upper threshold;

compensating for the PWM duty cycle of the current driving force of the second motor using the first upper threshold on condition of determining that the amount of compensation for the PWM duty cycle of the second motor exceeds the first upper threshold; and

compensating for the PWM duty cycle of the current driving force of the second motor using the amount of compensation for the PWM duty cycle of the second motor on condition of determining that the amount of compensation for the PWM duty cycle of the second motor fails to exceed the first upper threshold.

14. The method for controlling multi-elements to lift synchronously according to claim 12, wherein compensating for the PWM duty cycle of the current driving force of the first motor using the difference corresponding to the current observation period and the difference corresponding to the last observation period further comprises:

calculating an amount of compensation for the PWM duty cycle of the first motor using the following formula:

*amount of compensation for PWM duty cycle = $k_p \cdot$ |Gap_now| + $k_d \cdot$ |Ga_now - Gap_last| ;*

wherein $k_p$ is a proportion coefficient used to calculate the amount of compensation for the PWM duty cycle, $k_d$ is a differentiation coefficient used to calculate the amount of compensation for the PWM duty cycle, *Gap_now* is the difference corresponding to the current observation period, and *Gap_last* is the difference corresponding to the last observation period;

determining whether the amount of compensation for the PWM duty cycle of the first motor exceeds a second upper threshold;

compensating for the PWM duty cycle of the current driving force of the first motor using the second upper threshold on condition of determining that the amount of compensation for the PWM duty cycle of the first motor exceeds the second upper threshold; and

compensating for the PWM duty cycle of the current driving force of the first motor using the amount of compensation for the PWM duty cycle of the first motor on condition of determining that the amount of compensation for the PWM duty cycle of the first motor fails to exceed the second upper threshold.

15. The method for controlling multi-elements to lift synchronously according to claim 10, wherein the method further comprises:

on condition of receiving an instruction to instruct any one of the first motor or the second motor to rise or fall, controlling a counter associated with the corresponding motor to return to zero;

controlling the counter to record a number of observation periods required for the corresponding motor to reach the target position;

storing the recorded number of the counter in a sampling filter array, on condition of determining that the corresponding motor reaches the target position;

determining whether the sampling filter array meets a sampling filter output condition; and

calculating the stable driving force according to a target running time on condition of determining that the sampling filter array meets the sampling filter output condition.

16. The method for controlling multi-elements to lift synchronously according to claim 15, wherein calculating the stable driving force according to the target running time, on condition of determining that the sampling filter array meets the sampling filter output condition, further comprises:

calculating an average recorded number of the sampling filter array;

determining a time difference between the average recorded number and the target running time;

decreasing the current PWM duty cycle of the stable driving force according to the time difference, on condition that the time difference is less than 0; and

increasing the current PWM duty cycle of the stable driving force according to the time difference, on condition that the time difference is greater than 0.

FIG. 1

S10

Receive a synchronous instruction

S20

Control the first motor and the second motor to perform adaptive adjustment when the first motor and the second motor are in a start-up phase

S30

Determine whether a difference in each observation period between a detection value of the first detecting module and a detection value of the second detecting module is equal to 0 when the first motor and the second motor are in a stable phase

Y

N

S40

Determine that the first motor and the second motor have stable driving forces

S50

Control compensation for the driving force of the first motor or the driving force of the second motor

S60

Determine that the first motor and the second motor reach target positions

**FIG. 2**

| | |
|---|---|
| Set a PWM duty cycle of the first motor for start-up and a PWM duty cycle of the second motor for start-up separately to drive the first motor and the second motor to start | S21 |
| Detect a PWM duty cycle of a current driving force of the first motor and a PWM duty cycle of a current driving force of the second motor | S22 |
| Increase the PWM duty cycle of the driving force of the first motor at a first rate on condition that the PWM duty cycle of the current driving force of the first motor fails to reach a PWM duty cycle of the stable driving force | S23 |
| Increase the PWM duty cycle of the driving force of the second motor at a second rate on condition that the PWM duty cycle of the current driving force of the second motor fails to reach the PWM duty cycle of the stable driving force | S24 |
| Determine that the PWM duty cycle of the driving force of the first motor and the PWM duty cycle of the driving force of the second motor reach the PWM duty cycle of the stable driving force | S25 |

**FIG. 3**

difference>0

S51

Whether the difference is greater than 0

difference<0

S52

Compensate for the PWM duty cycle of the current driving force of the second motor using a difference corresponding to a current observation period and a difference corresponding to a last observation period

S53

Compensate for the PWM duty cycle of the current driving force of the first motor using the difference corresponding to the current observation period and the difference corresponding to the last observation period

**FIG. 4**

Control a counter associated with the corresponding motor to be reset in a case that the drive control module receives an instruction to instruct any one of the first motor and the second motor to rise or fall — P10

Control the counter to record a number of observation periods required for the corresponding motor to reach the target position — P20

Store the number of observation periods recorded by the counter in a sampling filter array in a case that it is determined that the corresponding motor has reached the target position — P30

Determine whether the sampling filter array meets a sampling filter output condition — P40

Calculate the stable driving force based on a target running time in a case that it is determined that the sampling filter array meets the sampling filter output condition — P50

**FIG. 5**

Calculate an average recorded number of the sampling filter array — P51

Determine whether a time difference between the average recorded number and the target running time is greater than 0 — P52

time difference<0

time difference>0

Decrease the current PWM duty cycle of the stable driving force according to the time difference — P53

Increase the current PWM duty cycle of the stable driving force according to the time difference — P54

**FIG. 6**

## INTERNATIONAL SEARCH REPORT

| International application No. |
| --- |
| **PCT/CN2023/134578** |

### A. CLASSIFICATION OF SUBJECT MATTER

H02P5/68(2006.01)i

According to International Patent Classification (IPC) or to both national classification and IPC

### B. FIELDS SEARCHED

Minimum documentation searched (classification system followed by classification symbols)

IPC:H02P

Documentation searched other than minimum documentation to the extent that such documents are included in the fields searched

Electronic data base consulted during the international search (name of data base and, where practicable, search terms used)

CNTXT; CNABS; DWPI; VEN; USTXT; WOTXT; EPTXT; CNKI; IEEE: 多个, 两个, 电机, 同步, 占空比, 脉冲宽度调制, 升降, 补偿, 计数, multi, two, motor, synchronous, duty ratio, PWM, lift, compensation, count

### C. DOCUMENTS CONSIDERED TO BE RELEVANT

| Category* | Citation of document, with indication, where appropriate, of the relevant passages | Relevant to claim No. |
| --- | --- | --- |
| PX | CN 115940698 A (YANFENG INTERNATIONAL AUTOMOTIVE TECHNOLOGY CO., LTD.) 07 April 2023 (2023-04-07) <br> description, paragraphs 4-100 | 1-16 |
| X | CN 104767427 A (SAINUO WEISHENG SCIENCE & TECHNOLOGY (BEIJING) CO., LTD.) 08 July 2015 (2015-07-08) <br> description, paragraphs 2-60, and figures 1-5 | 1-16 |
| X | CN 104085821 A (SHENYANG NEUSOFT MEDICAL SYSTEMS CO., LTD.) 08 October 2014 (2014-10-08) <br> description, paragraphs 2-173 | 1-6, 10-14 |
| X | JP 2008072851 A (OMRON TATEISI ELECTRONICS COMPANY) 27 March 2008 (2008-03-27) <br> description, paragraphs 5-58 | 1-6, 10-14 |
| A | CN 109245623 A (GUANGZHOU BAOLUN ELECTRONIC CO., LTD.) 18 January 2019 (2019-01-18) <br> entire document | 1-16 |

☑ Further documents are listed in the continuation of Box C. ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **03 February 2024** | **08 February 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/134578** |

**C.    DOCUMENTS CONSIDERED TO BE RELEVANT**

| Category* | Citation of document, with indication, where appropriate, of the relevant passages | Relevant to claim No. |
|---|---|---|
| A | US 2004046515 A1 (IBM) 11 March 2004 (2004-03-11)<br>        entire document | 1-16 |

Form PCT/ISA/210 (second sheet) (July 2022)

**INTERNATIONAL SEARCH REPORT**
**Information on patent family members**

International application No.

**PCT/CN2023/134578**

| Patent document cited in search report | | | Publication date (day/month/year) | Patent family member(s) | | | Publication date (day/month/year) |
|---|---|---|---|---|---|---|---|
| CN | 115940698 | A | 07 April 2023 | None | | | |
| CN | 104767427 | A | 08 July 2015 | CN | 104767427 | B | 05 December 2017 |
| CN | 104085821 | A | 08 October 2014 | CN | 104085821 | B | 06 July 2016 |
| JP | 2008072851 | A | 27 March 2008 | None | | | |
| CN | 109245623 | A | 18 January 2019 | None | | | |
| US | 2004046515 | A1 | 11 March 2004 | US | 6768281 | B2 | 27 July 2004 |

Form PCT/ISA/210 (patent family annex) (July 2022)